# EUROPEAN PATENT APPLICATION

(11) **EP 4 836 322 A1**
(43) Date of publication of application: **04.11.2026**
(21) Application number: 24913623.5
(22) Date of filing: 19.12.2024
(51) Int. Cl.: H04B 10/2575, H04B 10/29, H04L 12/46, H04L 12/28, H04W 88/08, H04W 92/20

(54) **METHOD FOR EFFICIENTLY MANAGING ANTENNA DEVICE, AND FRONTHAUL DEVICE USING SAME METHOD**

(30) Priority: 28.12.2023 KR 20230194894
(71) Applicant: SOLiD, INC., Gyeonggi-do 13493 (KR)
(72) Inventor: KIM, Woo Jae, Suwon-si Gyeonggi-do 16690 (KR); KWON, Dong Hee, Yongin-si Gyeonggi-do 16867 (KR); JEONG, Jin Tae, Yongin-si, Gyeonggi-do, 17066 (KR); HONG, Hoo Pyo, Seongnam-si Gyeonggi-do 13645 (KR); JANG, Ho Sik, Seongnam-si Gyeonggi-do 13528 (KR)
(74) Representative: Grünecker Patent- und Rechtsanwälte PartG mbB
(86) International application number: PCT/KR2024/020669
(87) International publication number: WO 2025/143680

(57) **Abstract**

In a method for managing antenna devices through a fronthaul multiplexer device according to an aspect of the present invention, configuration information of antenna devices is transmitted to a fronthaul multiplexer device, and whenever each antenna device is activated, the fronthaul multiplexer device transmits, on behalf of a distributed base station device, the configuration information of the antenna devices, so as to reduce the burden on the distributed base station device and enable an efficient antenna device configuration.

## Description

### [Technical Field]

The present invention relates to a relay technology of an open radio access network (O-RAN), and more specifically, to a technology for managing multiple antenna devices (radio units (RUs)) through a fronthaul multiplexer device device (FHM) rather than a distributed base station device (distributed unit (DU)).

### [Background Art]

An open radio access network (O-RAN) is a network in which an interface of a fronthaul connecting antenna devices (radio units (RUs)) and a distributed base station device (distributed unit (DU)) which are required for the implementation of base station equipment is standardized using open standards. In addition, a method of providing a shared cell service based on an open interface has also been standardized. A shared cell service involves one or more antenna devices constituting the same cell to provide the same service. To this end, copy and combine functions are defined to transmit the same data to multiple antenna devices constituting the same cell.

More specifically, in order to provide a shared cell service, a fronthaul multiplexer device device is introduced and a network structure in which multiple antenna devices are connected to the fronthaul multiplexer device device is defined. In addition, in the case of downlink data transmission, when a distributed base station device transmits a single piece of data, the fronthaul multiplexer device device copies the data received from the distributed base station device and transmits the copied data to multiple antenna devices constituting the same pre-configured cell. In the case of uplink data transmission, each of the antenna devices constituting the same cell transmits data, and the fronthaul multiplexer device device receives the data, combines the data into a single piece of data, and then transmits the single piece of data to the distributed base station device. This process is called a combine operation.

As described above, in order for the fronthaul multiplexer device device to perform copy and combine operations, the fronthaul multiplexer device should know information regarding which cell to which each antenna device connected thereto belongs, and in the O-RAN standard, the distributed base station device is formed to configure this information in the fronthaul multiplexer device. Therefore, the fronthaul multiplexer device performs copy and combine operations according to the information configured by the distributed base station device.

Each of the antenna devices connected to the fronthaul multiplexer device requires various types of configuration information to process data transmitted via the O-RAN interface standard, and this is configured at the distributed base station device. That is, regardless of whether the antenna devices connected to the fronthaul multiplexer device constitute the same cell, the standard defines that each of the antenna devices directly receives configuration information from the distributed base station device and the distributed base station device manages each of the antenna devices.

However, in consideration of a shared cell service, a single piece of data is copied and transmitted to each antenna device, and each antenna device should process this data identically. This means that configurations related to data processing by the antenna devices should be identical for all the antenna devices constituting the same cell. Therefore, the fact that the same configurations related to data processing are individually set on each antenna device by the distributed base station is a repetition of the same work, and when there is a way to improve this, it would be possible to reduce the overhead of the distributed base station and efficiently manage the antenna devices.

### [Description of Invention]

### [Technical Problem]

The present invention aims to provide a function to efficiently transmit the same configuration information to each antenna device and manage the same configuration information when a fronthaul multiplexer device is used to provide a shared cell service in an open fronthaul network.

### [Technical Solution]

A method of efficiently managing antenna devices according to an aspect of the present invention is a method of setting and managing antenna devices in an open fronthaul network and includes transmitting, by a distributed base station device, information on shared cells, storing, by a fronthaul multiplexer device, the information on the shared cells, transmitting, by the distributed base station device, configuration information of the antenna devices, storing, by the fronthaul multiplexer device, the configuration information of the antenna devices, and transmitting, by the fronthaul multiplexer device, the configuration information of the antenna devices.

The transmitting of, by the distributed base station device, the information on the shared cells is an operation in which the distributed base station device transmits the information on the shared cells to the fronthaul multiplexer device.

The storing of, by the fronthaul multiplexer device, the information on the shared cells is an operation in which the fronthaul multiplexer device stores and manages the received information on the shared cells.

The transmitting of, by the distributed base station device, the configuration information of the antenna devices is an operation in which the distributed base station device transmits the configuration information of the antenna devices to the fronthaul multiplexer device.

The storing of, by the fronthaul multiplexer device, the configuration information of the antenna devices is an operation in which the fronthaul multiplexer device stores and manages the received configuration information of the antenna devices.

The transmitting of, by the fronthaul multiplexer device, the configuration information of the antenna devices is an operation in which the fronthaul multiplexer device transmits the configuration information to each of the antenna devices belonging to the same shared cell.

When an open fronthaul network using the method of efficiently managing the antenna devices according to an aspect of the present invention includes a plurality of shared cells, the transmitting of, by the distributed base station device, the information on the shared cells, the storing of, by the fronthaul multiplexer device, the information on the shared cells, the transmitting of, by the distributed base station device, the configuration information of the antenna devices, and the storing of, by the fronthaul multiplexer device, the configuration information of the antenna devices are performed on each shared cell, and the storing of, by the fronthaul multiplexer device, the configuration information of the antenna devices is an operation in which the fronthaul multiplexer device stores and manages the configuration information of the antenna devices for the plurality of shared cells and is an operation in which the fronthaul multiplexer device stores and manages the configuration information received from the distributed base station device for each shared cell.

In the storing of, by the fronthaul multiplexer device, the configuration information of the antenna devices in the method of efficiently managing the antenna devices according to an aspect of the present invention, data processing information intended to be configured for each antenna device may be generated on the basis of the information on the shared cells for each antenna device, the generated data processing information may be added to the configuration information, and the configuration information may be stored.

A fronthaul multiplexer device for managing antenna devices according to an aspect of the present invention includes a packet reception unit, a packet transmission unit, a management information packet processing unit, a shared cell information management unit, and an antenna device management unit.

The packet reception unit receives downlink packets from a distributed base station device, receives uplink packets from the antenna devices, and determines whether the received packets are management information packets or data information packets.

The packet transmission unit transmits the uplink packets to the distributed base station device and transmits the downlink packets to the antenna devices.

The management information packet processing unit receives the management information packets, determines whether the received packets are shared cell information packets or antenna device configuration information packets, and forwards the management information packets to a corresponding unit based on the determination.

The shared cell information management unit receives the shared cell information packets and stores and manages information on shared cells.

The antenna device management unit receives the antenna device configuration information packets and stores and manages the configuration information of the antenna devices.

The antenna device management unit may store and manage configuration information received from the distributed base station device for each shared cell.

The antenna device management unit may generate data processing information intended to be configured for each antenna device on the basis of the information on the shared cells for each antenna device, add the generated data processing information to the configuration information, and store the configuration information.

### [Advantageous Effects]

According to the present invention, when a shared cell service based on a fronthaul multiplexer device is provided in an open fronthaul network, the fronthaul multiplexer device can efficiently perform the configuration of each antenna device to reduce the management overhead of a distributed base station device, thereby enabling efficient management of the antenna devices.

### [Description of Drawings]

FIG. 1 is a diagram illustrating an example of an open fronthaul network structure including a distributed base station device, a fronthaul multiplexer device, and a plurality of antenna devices.
FIG. 2 is a diagram illustrating a procedure of managing, by a distributed base station device of the related art, a fronthaul multiplexer device and each antenna device.
FIG. 3 is a diagram illustrating a procedure of transmitting management information to each antenna device through a fronthaul multiplexer device according to the present invention.
FIG. 4 is a flowchart of a method of efficiently managing antenna devices according to an aspect of the present invention.
FIG. 5 is a block diagram of a fronthaul multiplexer device according to an aspect of the present invention.

### [Modes of the Invention]

The above-described aspects and additional aspects of the present invention are embodied in embodiments described with reference to the accompanying drawings. It should be understood that components of each embodiment may be combined in various ways within the embodiment unless otherwise stated or contradictory. Each block in a block diagram may represent a physical component in some cases, but in others, it may be a logical representation of a part of a function of a single physical component or a function spanning a plurality of physical parts. Sometimes, the entity of a block or part thereof may be a set of program instructions. All or part of these blocks may be implemented by hardware, software, or a combination thereof.

A distributed base station device performs configuration of each antenna device on the basis of the Network Configuration Protocol (NETCONF) and uses a data model defined as Yet Another Next Generation (YANG). YANG models used in each antenna device are defined using the standard and may be classified into one representing hardware and implemented software information of the antenna device and another representing information necessary for data processing. In this specification, information that should be set in relation to data processing in each antenna device will be limitedly described.

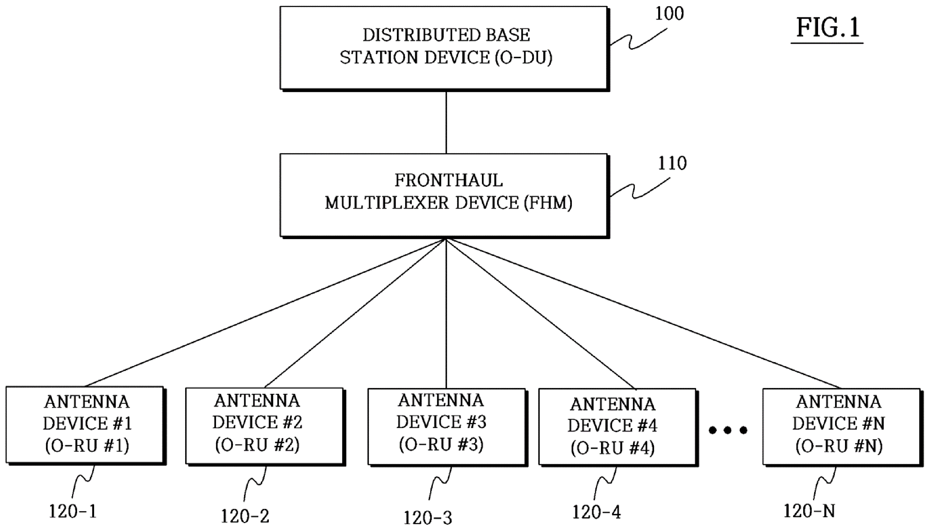

FIG. 1 is a diagram illustrating an example of an open fronthaul network structure including a distributed base station device, a fronthaul multiplexer device (FHM), and a plurality of antenna devices. FIG. 1 illustrates that one FHM 110 is connected to one distributed base station device (O-DU) 100 and N antenna devices (O-RUs) 120-1, 120-2, 120-3, 120-4, ..., and 120-N are connected to the FHM 110. An example of the open fronthaul network structure illustrated in FIG. 1 provides a shared cell function by utilizing the FHM 110. In this case, the FHM 110 has a configuration for a shared cell service, and information on the corresponding configuration is information transmitted by the distributed base station device 100 to the FHM 110. The information on the configuration for the shared cell service includes information on an interface connected to the distributed base station device 100, information on an interface to which the antenna devices 120-1 to 120-N constituting the shared cell are connected, information on downlink data transmitted from the distributed base station device 100 to each of the antenna devices 120-1 to 120-N and information for transmitting the downlink data, and information on uplink data transmitted from each of the antenna devices 120-1 to 120-N to the distributed base station device 100 and information for transmitting the uplink data.

Further, the distributed base station device 100 also transmits the configuration information to each of the antenna devices 120-1 to 120-N so that data transmitted through an open network interface may be processed. The configuration information transmitted to each of the antenna devices 120-1 to 120-N includes interface information for receiving downlink data or transmitting uplink data, information for transmitting the downlink data to each antenna, information necessary for converting the downlink data into wireless data, information necessary for receiving uplink data from each antenna and converting the uplink data into wired data, and antenna information for transmitting or receiving wireless data.

The interface information is information necessary for transmitting or receiving data between the antenna devices 120-1 to 120-N and a device connected via a fronthaul network, that is, the distributed base station device 100, or the FHM 110, and is, in the case of Ethernet communication, media access control (MAC) layer addresses of the antenna devices 120-1 to 120-N, a MAC layer address of the distributed base station device 100 or the FHM 110, and virtual local area network (VLAN) ID information. The information for transmitting the downlink data to each antenna is to set an ID that distinguishes physical antennas of the antenna devices 120-1 to 120-N, and this ID is transmitted together when the downlink data is transmitted to inform the antenna devices 120-1 to 120-N of which antenna the downlink data should be transmitted through. The information necessary for converting the downlink data into the wireless data includes inverse fast Fourier transform (iFFT) information necessary for converting a digital signal into an analog signal performed by the antenna devices 120-1 to 120-N, information on signal strength, etc. The information necessary for receiving the uplink data from each antenna and converting the uplink data into the wired data includes frequency band information in which the antenna devices 120-1 to 120-N operate, frequency information for receiving data transmitted per wireless channel, etc. The antenna information for transmitting or receiving the wireless data includes the number of physical antennas, location information on each antenna, information on angles at which the antennas are mounted, etc.

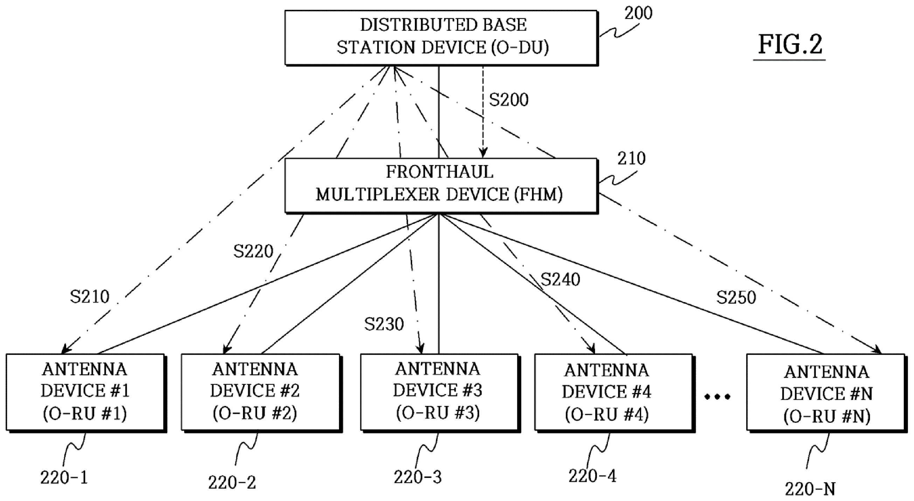

FIG. 2 is a diagram illustrating a procedure of managing, by a distributed base station device of the related art, an FHM and each antenna device. In the example of FIG. 2, when an FHM 210 is installed, a distributed base station device 200 enables the FHM 210 to provide a shared cell service through the transmission of configuration information for the shared cell service (S200). In addition, whenever each of the antenna devices 220-1 to 220-N is connected to the FHM 210, the distributed base station device 200 configures each of the antenna devices 220-1 to 220-N to process data transmitted through an open network interface through the transmission of antenna device configuration information (S210, S220, S230, S240, and S250). In this case, when the antenna devices 220-1 to 220-N constitute the same shared cell, the antenna device configuration information transmitted to each of the antenna devices 220-1 to 220-N is substantially the same information, and the same operation is repeated.

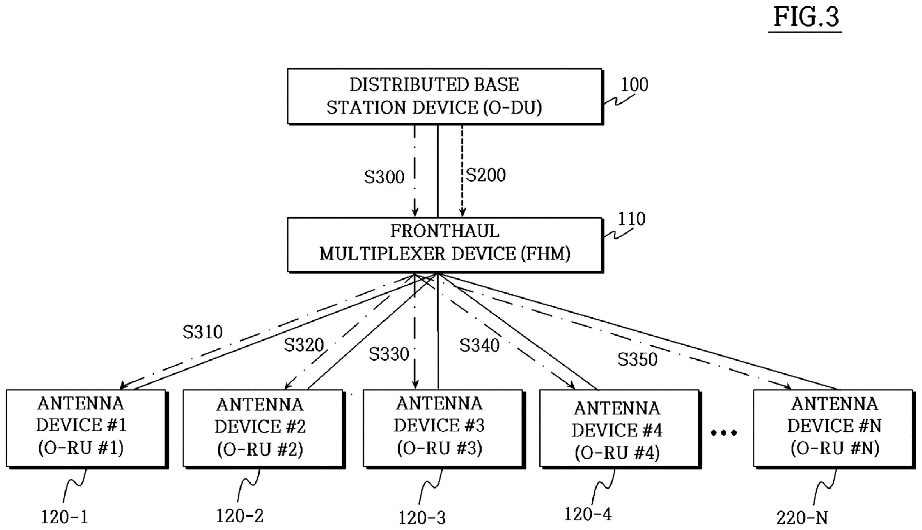

FIG. 3 is a diagram illustrating a procedure of transmitting management information to each antenna device through an FHM according to the present invention. Referring to FIG. 3, in the present invention, unlike the related art, when a distributed base station device 100 transmits antenna device configuration information to an FHM 110 for a shared cell one time (S300), the FHM 110 transmits the antenna device configuration information to antenna devices 120-1 to 120-N belonging to the same shared cell (S310, S320, S330, S340, and S350).

In the example of FIG. 3, when the FHM 110 is installed, the distributed base station device 100 enables the FHM 110 to provide a shared cell service through the transmission of configuration information for the shared cell service (S200). In addition, the distributed base station device 100 transmits configuration information of antenna devices constituting the corresponding shared cell to the FHM 110 (S300). Thereafter, whenever each of the antenna devices 120-1 to 120-N is connected to the FHM 110, the FHM 110 transmits the antenna device configuration information to each of the antenna devices 120-1 to 120-N on the basis of the antenna device configuration information transmitted from the distributed base station device 100 (S310, S320, S330, S340, and S350) to set so that each of the antenna devices 120-1 to 120-N may process data transmitted through an open network interface.

The antenna device configuration information transmitted by the FHM 110 to each of the antenna devices 120-1 to 120-N is information that the antenna devices 120-1 to 120-N should use when processing data, and as described above, includes interface information for receiving downlink data or transmitting uplink data, information for transmitting the downlink data to each antenna, information necessary for converting the downlink data into wireless data, information necessary for receiving uplink data from each antenna and converting the uplink data into wired data, and antenna information for transmitting or receiving wireless data. The antenna device configuration information may be generated based on information on an interface connected to the distributed base station device 100 included in the configuration information for the shared cell service transmitted from the distributed base station device 100 for shared cell configuration, information on an interface to which the antenna devices 120-1 to 120-N constituting the shared cell are connected, information on downlink data transmitted from the distributed base station device 100 to each of the antenna devices 120-1 to 120-N and information for transmitting the downlink data, and information on uplink data transmitted from each of the antenna devices 120-1 to 120-N to the distributed base station device 100 and information for transmitting the uplink data.

The FHM 110 may check an ID of the shared cell to which the antenna devices 120-1 to 120-N belong when the antenna devices 120-1 to 120-N are connected to the corresponding interface, on the basis of the information on the interface to which the antenna devices 120-1 to 120-N constituting the shared cell are connected.

Based on this, information on an interface required for the interface information for receiving the downlink data or transmitting the uplink data may be checked from the information on the interface connected to the distributed base station device 100. This information includes Ethernet MAC address information and VLAN ID information.

The information for transmitting the downlink data to each antenna, the information necessary for converting the downlink data into wireless data, and the information necessary for receiving the uplink data from each antenna and converting the uplink data into wired data may be generated from the information on the downlink data transmitted from the distributed base station device 100 to each of the antenna devices 120-1 to 120-N and the information for transmitting the downlink data, and the information on the uplink data transmitted from each of the antenna devices 120-1 to 120-N to the distributed base station device 100 and the information for transmitting the uplink data. Packet flow information (including Flow ID information defined as an extended Antenna-Carrier Identifier (eAxC ID) in the open fronthaul interface standard, address information of a transmitting/receiving device to which packets are transmitted, and VLAN ID information, and when the packets are compressed, information on which compression technique was used and parameters required for the compression technique) that the antenna devices 120-1 to 120-N should receive is identical to packet flow information that the FHM 110 performs copy and combine operations on, and the method by which the FHM 110 and the antenna devices 120-1 to 120-N determine the packet flow is also identical. The packet flow may first determine whether a packet is receivable on the basis of an address and a VLAN ID of the transmitting/receiving device, second determine which location in a resource map, to which the packet belongs, defined in the NR standard, and third determine which antenna the packet should be transmitted to on the basis of the eAxC ID. In addition, which compression technique and parameters may be determined to use when decompressing compressed packets or when compressing packets.

Accordingly, the FHM 110 may generate, store, and manage information intended to be configured for each of the antenna devices 120-1 to 120-N from configuration information of the shared cell.

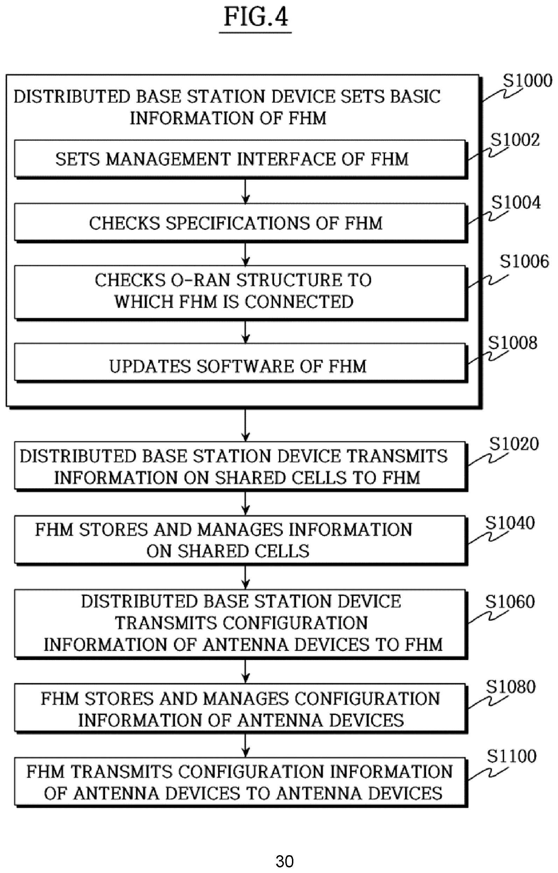

FIG. 4 is a flowchart of a method of efficiently managing antenna devices according to an aspect of the present invention. The method of efficiently managing the antenna devices according to an aspect of the present invention is a method of setting and managing antenna devices 120-1 to 120-N in an open fronthaul network, and includes transmitting, by a distributed base station device 100, information on shared cells, storing, by an FHM 110, the information on the shared cells, transmitting, by the distributed base station device 100, configuration information of the antenna devices, storing, by the FHM 110, the configuration information of the antenna devices, and transmitting, by the FHM 110, the configuration information of the antenna devices.

When the FHM is connected, the distributed base station device 100 first performs an operation in which the distributed base station device 100 checks the FHM 110 and sets basic information for the use of the FHM 110 (S1000). The operation in which the distributed base station device 100 checks the FHM 110 and sets basic information for the use of the FHM 110 includes an operation S1002 of setting a management interface of the FHM 110 according to the order defined in the open interface standard, an operation S1004 of checking specifications of the FHM 110, an operation S1006 of checking an open fronthaul network structure connected through the FHM 110, and an operation S1008 of updating the software of the FHM 110 as necessary. In the updating of the software of the FHM 110, when the distributed base station device 100 instructs the FHM 110 to update the software, the FHM 110 updates the software.

The shared cell configuration for the FHM 110 is performed through the transmitting of, by the distributed base station device 100, the information on the shared cells and the storing of, by the FHM 110, the information on the shared cells.

The transmitting of, by the distributed base station device 100, the information on the shared cells is an operation in which the distributed base station device 100 transmits the information on the shared cells to the FHM 110 (S1020). The distributed base station device 100 transmits packet copy and the packet combine configuration information to the FHM 110 to provide a shared cell service, thereby enabling the FHM 110 to perform settings for shared cell operation. The information on the shared cells is configuration information for the shared cell service and includes information on an interface connected to the distributed base station device 100, information on an interface to which the antenna devices 120-1 to 120-N constituting the shared cell are connected, information on downlink data transmitted from the distributed base station device 100 to each of the antenna devices 120-1 to 120-N and information for transmitting the downlink data, and information on uplink data transmitted from each of the antenna devices 120-1 to 120-N to the distributed base station device 100 and information for transmitting the uplink data. That is, the information on the shared cells may include information on an interface to which antenna devices 120-1 to 120-N belonging to the shared cell may be connected, Ethernet address and VLAN ID information to be used for packet transmission, packet flow information to be copied (including Flow ID defined as an eAxC ID in the open fronthaul interface standard), packet flow information to be combined, compression algorithms and related information for decompression and recompression when compressed, etc.

The storing of, by the FHM 110, the information on the shared cells is an operation in which the FHM 110 stores and manages the received information on the shared cells (S1040). The FHM 110 performs settings for shared cell operation according to the received information on the shared cells. The FHM 110 copies a downlink packet received from the distributed base station device 100 according to these settings and transmits the copied downlink packet to the antenna devices 120-1 to 120-N of the same shared cell, and combines uplink packets received from the antenna devices 120-1 to 120-N belonging to the same shared cell.

The transmitting of, by the distributed base station device 100, the configuration information of the antenna devices is an operation in which the distributed base station device 100 transmits the configuration information of the antenna devices to the FHM 110 (S1060). In the transmitting of, by the distributed base station device 100, the configuration information of the antenna device, the distributed base station device 100 transmits information for configuring each of the antenna devices 120-1 to 120-N to process data when receiving the data through the fronthaul interface, to the FHM 110. In the related art illustrated in FIG. 2, although the distributed base station device 100 directly transmits the configuration information of the antenna devices to each of the antenna devices 120-1 to 120-N, the present invention uses the FHM 110 as a proxy device for the corresponding configuration information. That is, unlike in the related art, in the present invention, the distributed base station device 100 transmits the configuration information of the antenna devices to the FHM 110 only one time, regardless of the number of antenna devices constituting the shared cell.

The storing of, by the FHM 110, the configuration information of the antenna devices is an operation in which the FHM 110 stores and manages the received configuration information of the antenna devices (S1080).

The transmitting of, by the FHM 110, the configuration information of the antennas is an operation in which the FHM 110 transmits the configuration information to each of the antenna devices 120-1 to 120-N belonging to the same shared cell (S1100). When the FHM 110 confirms that the connection of each of the antenna devices 120-1 to 120-N constituting the shared cell to the interface of the FHM 110 is activated, the FHM 110 checks configuration information to be commonly applied to the antenna devices 120-1 to 120-N belonging to the corresponding shared cell and transmits the configuration information to the antenna devices 120-1 to 120-N. Further, the FHM 110 transmits data processing information of the antenna devices 120-1 to 120-N constituting the shared cell. The data processing information of the antenna devices 120-1 to 120-N includes interface information for receiving downlink data or transmitting uplink data, information for transmitting the downlink data to each antenna, information necessary for converting the downlink data into wireless data, information necessary for receiving uplink data from each antenna and converting the uplink data into wired data, and antenna information for transmitting or receiving wireless data.

When an open fronthaul network using the method of efficiently managing the antenna devices according to an aspect of the present invention includes a plurality of shared cells, the transmitting of, by the distributed base station device 100, the information on the shared cells, the storing of, by the FHM 110, the information on the shared cells, the transmitting of, by the distributed base station device 100, the configuration information of the antenna devices, and the storing of, by the FHM 110, the configuration information of the antenna devices are performed for each shared cell.

In this case, the storing of, by the FHM, the configuration information of the antenna devices is an operation in which the FHM 110 stores and manages the configuration information of the antenna devices for the plurality of shared cells and is an operation in which the FHM 110 stores and manages the configuration information received from the distributed base station device 100 for each shared cell. When the FHM 110 confirms that the connection of each of the antenna devices 120-1 to 120-N constituting the shared cell to the interface of the FHM 110 is activated, the FHM 110 checks which shared cell to which the antenna devices 120-1 to 120-N in the connection activated state belong on the basis of the pre-configured information of the shared cell, checks the configuration information to be commonly applied to the antenna devices 120-1 to 120-N belonging to the shared cell, and then transmits the configuration information to the antenna devices 120-1 to 120-N. Further, the FHM 110 transmits data processing information of the antenna devices 120-1 to 120-N constituting the shared cell.

In the storing of, by the FHM, the configuration information of the antenna device in the method of efficiently managing the antenna devices according to an aspect of the present invention, data processing information intended to be configured for each of the antenna devices 120-1 to 120-N may be generated on the basis of the information on the shared cells for each antenna device, the generated data processing information may be added to the configuration information, and the configuration information may be stored.

The FHM 110 may independently generate and store the data processing information for each of the antenna devices 120-1 to 120-N on the basis of the pre-configured configuration information of the shared cell.

The FHM 110 checks an ID of the shared cell to which the antenna devices 120-1 to 120-N belong when the antenna devices 120-1 to 120-N are connected to the corresponding interface, on the basis of the information on the interface to which the antenna devices 120-1 to 120-N constituting the shared cell are connected. Based on this, the FHM 110 may check information on an interface required for the interface information for receiving the downlink data or transmitting the uplink data from the information on the interface connected to the distributed base station device 100. This information includes Ethernet MAC address information and VLAN ID information.

The FHM 110 may generate the information for transmitting the downlink data to each antenna, the information necessary for converting the downlink data into wireless data, and the information necessary for receiving the uplink data from each antenna and converting the uplink data into the wired data from the information on the downlink data transmitted from the distributed base station device 100 to each of the antenna devices 120-1 to 120-N and the information for transmitting the downlink data, and the information on the uplink data transmitted from each of the antenna devices 120-1 to 120-N to the distributed base station device 100 and the information for transmitting the uplink data.

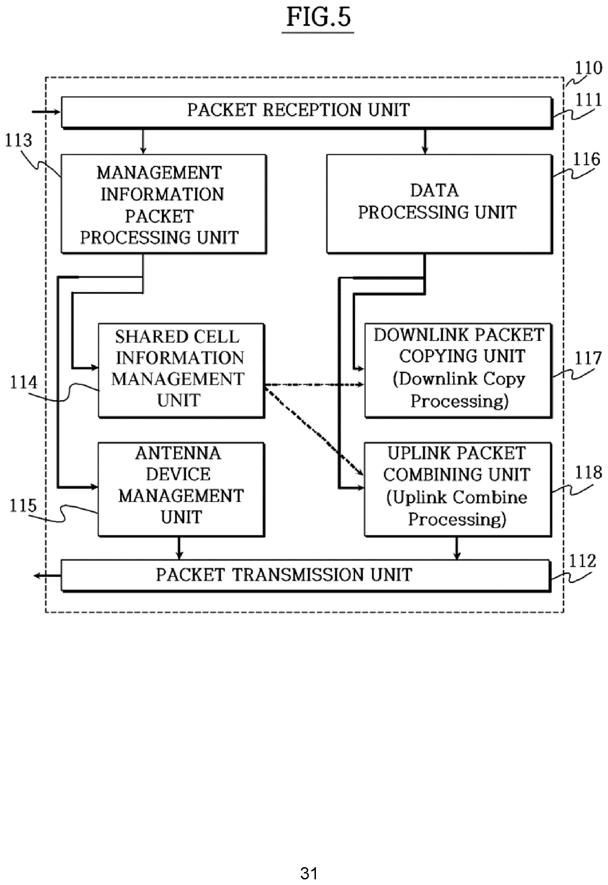

FIG. 5 is a block diagram of an FHM 110 according to an aspect of the present invention. The FHM 110 for managing antenna devices according to an aspect of the present invention includes a packet reception unit 111, a packet transmission unit 112, a management information packet processing unit 113, a shared cell information management unit 114, and an antenna device management unit 115.

Additionally, for packet processing, the FHM 110 further includes a data processing unit 116, a downlink packet copying unit 117, and an uplink packet combining unit 118.

The packet reception unit 111 receives downlink packets transmitted from a distributed base station device 100, receives uplink packets transmitted from antenna devices 120-1 to 120-N, and determines whether the received packets are management information packets containing management information or data information packets that should be transmitted to a user. When it is determined that the received packets are the management information packets, the packet reception unit 111 transmits the received packets to the management information packet processing unit 113.

The packet transmission unit 112 transmits the uplink packets to the distributed base station device 100 and transmits the downlink packets to the antenna devices 120-1 to 120-N.

The data processing unit 116 determines the data information packets, distinguishes the packets into the uplink packets and the downlink packets, transmits the packets distinguished into the downlink packets to the downlink packet copying unit 117, and transmits the packets distinguished into the uplink packets to the uplink packet combining unit 118.

The management information packet processing unit 113 receives the management information packets, determines whether the management information packets are shared cell information packets or antenna device configuration information packets, and forwards the packets to a corresponding unit based on the determination. The management information packet processing unit 113 receives the management information packets, then determines whether the corresponding information contains configuration information of the shared cell or contains configuration information of antenna devices, and when it is determined that the corresponding information contains the configuration information of the shared cell, transmits the corresponding information to the shared cell information management unit 114, and when it is determined that the corresponding information contains the configuration information of the antenna devices, transmits the corresponding information to the antenna device management unit 115.

The shared cell information management unit 114 receives the shared cell information packets and stores and manages information on shared cells. The shared cell information management unit 114 stores and manages information on an interface to which antenna devices 120-1 to 120-N belonging to the corresponding shared cell may be connected, Ethernet address and VLAN ID information to be used for packet transmission, packet flow information to be copied (including Flow ID defined as an eAxC ID in the open fronthaul interface standard), packet flow information to be combined, compression algorithms and related information for decompression and recompression when compressed, etc., on the basis of the transmitted information.

The antenna device management unit 115 receives the antenna device configuration information packets and stores and manages the configuration information of the antenna devices. The antenna device management unit 115 stores and manages fronthaul interface information for data processing settings of the antenna devices 120-1 to 120-N, packet flow information, information on an antenna through which data corresponding to each flow ID should be transmitted, information required for data conversion before wirelessly transmitting data received with each flow ID, etc. Further, when the antenna device management unit 115 confirms that the connection of each of the antenna devices 120-1 to 120-N constituting the shared cell to the interface of each FHM 110 has been activated, the antenna device management unit 115 transmits the configuration information of the antenna devices to the antenna devices 120-1 to 120-N in the connection activated state.

The downlink packet copying unit 117 copies packets on the basis of packet copy information stored and managed by the shared cell information management unit 114 and transmits the copied packets to the packet transmission unit in order to transmit the copied packets to each of the antenna devices 120-1 to 120-N, and the uplink packet combining unit 118 combines packets on the basis of packet combine information stored and managed by the shared cell information management unit 114 and transmits the combined packet to the packet transmission unit in order to transmit the combined packet to the distributed base station device 100.

When the FHM 110 according to an aspect of the present invention is used in an open fronthaul network including a plurality of shared cells, the antenna device management unit 115 may store and manage configuration information received from the distributed base station device 100 for each shared cell.

In this case, when the FHM 110 is used in the open fronthaul network including the plurality of shared cells, the antenna device management unit 115 may store and manage the configuration information received from the distributed base station device 100 for each shared cell. When the antenna device management unit 115 confirms that the connection of each of the antenna devices 120-1 to 120-N constituting the shared cell to the interface is activated, the antenna device management unit 115 checks which shared cell to which the antenna devices 120-1 to 120-N in the connection activated state belong on the basis of the pre-configured information of the shared cell, checks the configuration information to be commonly applied to the antenna devices 120-1 to 120-N belonging to the shared cell, and then transmits the configuration information to the antenna devices 120-1 to 120-N. Further, the antenna device management unit 115 transmits data processing information of the antenna devices 120-1 to 120-N constituting the shared cell.

The antenna device management unit 115 may generate data processing information intended to be configured for each of the antenna devices 120-1 to 120-N on the basis of the information on the shared cells for each antenna device, add the generated data processing information to the configuration information, and store the configuration information.

The antenna device management unit 115 checks an ID of the shared cell to which the antenna devices 120-1 to 120-N belong when the antenna devices 120-1 to 120-N are connected to the corresponding interface, on the basis of the information on the interface to which the antenna devices 120-1 to 120-N constituting the shared cell are connected. Based on this, the antenna device management unit 115 may check information on an interface required for the interface information for receiving the downlink data or transmitting the uplink data from the information on the interface connected to the distributed base station device 100. This information includes Ethernet MAC address information and VLAN ID information.

The antenna device management unit 115 may generate the information for transmitting the downlink data to each antenna, the information necessary for converting the downlink data into wireless data, and the information necessary for receiving the uplink data from each antenna and converting the uplink data into wired data from the information on the downlink data transmitted from the distributed base station device 100 to each of the antenna devices 120-1 to 120-N and the information for transmitting the downlink data, and the information on the uplink data transmitted from each of the antenna devices 120-1 to 120-N to the distributed base station device 100 and the information for transmitting the uplink data.

While exemplary embodiments of the present invention have been described with reference to the accompanying drawing, the present invention is not limited to the exemplary embodiments. It should be interpreted that various modifications that can be apparently made by those skilled in the art are included in the scope of the present invention. The patent claims are intended to cover these various modifications.

## Claims

1. A method of efficiently managing antenna devices, which is a method of managing antenna devices through a fronthaul multiplexer device that provides a shared cell service between a distributed base station device (distributed unit (DU)) and one or more antenna devices (radio units (RUs)), comprising:
transmitting, by the distributed base station device, information on shared cells to the fronthaul multiplexer device;
storing and managing, by the fronthaul multiplexer device, the information on the shared cells;
transmitting, by the distributed base station device, configuration information of the antenna devices to the fronthaul multiplexer device;
storing and managing, by the fronthaul multiplexer device, the configuration information of the antenna devices; and
transmitting, by the fronthaul multiplexer device, the configuration information to each antenna device belonging to the same shared cell.

2. The method of efficiently managing antenna devices of claim 1, wherein, in the storing and managing of, by the fronthaul multiplexer device, the configuration information of the antenna devices, the configuration information received from the distributed base station device is stored and managed for each shared cell.

3. The method of efficiently managing antenna devices of claim 1, wherein, in the storing and managing of, by the fronthaul multiplexer device, the configuration information of the antenna devices, data processing information intended to be configured for each antenna device is generated on the basis of the information on the shared cells for each antenna device, the generated data processing information is added to the configuration information, and the configuration information is stored.

4. A fronthaul multiplexer device for managing antenna devices, comprising:
a packet reception unit configured to receive downlink packets from a distributed base station device, receive uplink packets from the antenna devices, and determine whether the received packets are management information packets or data information packets;
a packet transmission unit configured to transmit the uplink packets to the distributed base station device and transmit the downlink packets to the antenna devices;
a management information packet processing unit configured to receive management information packets, determine whether the received management information packets are shared cell information packets or antenna device configuration information packets, and forward the management information packets to a corresponding unit based on the determination;
a shared cell information management unit configured to receive shared cell information packets and store and manage information on shared cells; and
an antenna device management unit configured to receive the antenna device configuration information packets and store and manage configuration information of the antenna devices.

5. The fronthaul multiplexer device for managing antenna devices of claim 4, wherein the antenna device management unit stores and manages the configuration information received from the distributed base station device for each shared cell.

6. The fronthaul multiplexer device for managing antenna devices of claim 4, wherein the antenna device management unit generates data processing information intended to be configured for each antenna device on the basis of the information on the shared cells for each antenna device, adds the generated data processing information to the configuration information, and stores the configuration information.
